# EUROPEAN PATENT APPLICATION

(11) **EP 1 035 177 A1**
(43) Date of publication of application: **13.09.2000**
(21) Application number: 00105097.0
(22) Date of filing: 10.03.2000
(51) Int. Cl.: C09D 11/00, C09D 11/02, C09D 11/16, C09D 17/00

(54) **Aqueous pigment dispersion, water-base ink composition, and recording method using the ink composition**

(30) Priority: 10.03.1999 JP 6351899; 10.03.1999 JP 6352599
(71) Applicant: SEIKO EPSON CORPORATION, Shinjuku-ku Tokyo-to (JP); ORIENT CHEMICAL INDUSTRIES, LTD., Osaka-shi Osaka-fu (JP)
(72) Inventor: Ito, Hiroshi, Suwa-shi, Nagano-ken (JP); Momose, Masayuki, Suwa-shi, Nagano-ken (JP); Hayashi, Hiroko, Suwa-shi, Nagano-ken (JP); Ito, Sohko, Laboratory Orient Chemical Ind., Ltd., Osaka-fu (JP)
(74) Representative: Grünecker, Kinkeldey, Stockmair & Schwanhäusser Anwaltssozietät

(57) **Abstract**

Disclosed are an aqueous pigment dispersion and an ink composition which can realize prints having high print density. The aqueous pigment dispersion comprises water and a surface-modified carbon black, the surface-modified carbon black having a specific surface area (m²/g)/DBP oil absorption (ml/100 g) ratio of 0.3 to 2.5 and having on the surface thereof hydrophilic functional groups which make the carbon black dispersible and/or dissolvable in water without any dispersant.

## Description

### BACKGROUND OF THE INVENTION

### Field of the Invention

The present invention relates to an aqueous pigment dispersion containing a surface-modified carbon black, and a water-base ink composition comprising this aqueous pigment dispersion.

### Background Art

Water-soluble dyes have hitherto been used in recording liquids for water-base writing implements and ink jet printers. On the other hand, in recent years, pigments, such as carbon blacks, have become used as colorants from the viewpoint of improving image quality and fastness properties of records. For example, Japanese Patent Laid-Open Nos. 6074/1989 and 31881/1989 describe water-base pigment inks wherein carbon black was dispersed with the aid of a surfactant or a polymeric dispersant.

In these inks, however, increasing the content of the colorant in the ink to enhance the print density of records has sometimes resulted in greately increased viscosity of the ink. The use of an excessive amount of a surfactant or a polymeric dispersant is necessary to stably disperse carbon black in the ink. The presence of the surfactant and the polymeric dispersant, however, may cause bubbles or deteriorated antifoaming properties, and, particularly in ink jet recording, may deteriorate the printing stability.

In order to solve these problems, Japanese Patent Laid-Open Nos. 3498/1996 and 120958/1998 describe surface-modified carbon black dispersions wherein surface active hydrogen or a salt thereof has been introduced in a given amount or larger to permit the carbon black to be solely dispersed in an aqueous solvent without any surfactant or polymeric dispersant. Japanese Patent Laid-Open No. 110127/1998 describes a method for introducing sulfone groups into carbon black. Further, Japanese Patent Laid-Open No. 95941/1998 proposes an ink for ink jet recording, comprising the above surface-modified carbon black and a glycol ether.

### SUMMARY OF THE INVENTION

The present inventors have now found that a surface-modified carbon black, which has a specific surface area/DBP oil absorption ratio in a specific range and has been produced by modifying the surface of carbon black, can realize printing at higher print density and can provide ink compositions which yield records having higher image quality. The present invention has been made based on such finding.

Accordingly, it is an object of the present invention to provide an aqueous pigment dispersion and a water-base ink composition which can realize printing at high print density and can yield records having higher image quality.

According to one aspect of the present invention, there is provided an aqueous pigment dispersion comprising at least water and a surface-modified carbon black, the surface-modified carbon black having a specific surface area (m²/g)/DBP oil absorption (ml/100 g) ratio of 0.3 to 2.5 and having on the surface thereof hydrophilic functional groups which make the carbon black dispersible and/or dissolvable in water without any dispersant.

According to another aspect of the present invention, there is provided a water-base ink composition comprising at least the above aqueous pigment dispersion.

### BRIEF DESCRIPTION OF THE DRAWING

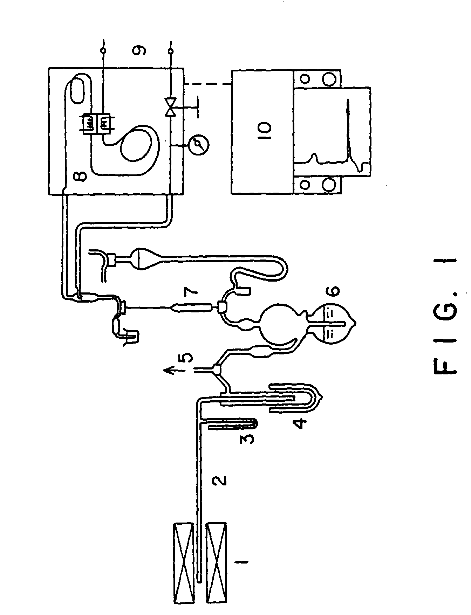

Fig. 1 is a schematic diagram showing a vacuum pyrolysis apparatus for measuring the content of hydrophilic functional groups in a surface-modified carbon black.

### DESCRIPTION OF THE PREFERRED EMBODIMENTS

### Aqueous pigment dispersion

The aqueous pigment dispersion according to the present invention comprises at least water and a surface-modified carbon black. The surface-modified carbon black has a specific surface area (m²/g)/DBP oil absorption (ml/100 g) ratio of 0.3 to 2.5. Further, it is dispersible and/or dissolvable in water without any dispersant by virtue of the presence of hydrophilic functional groups introduced into the surface of the carbon black to modify the surface of the carbon black.

According to the present invention, hydrophilic functional groups are introduced in a large amount into carbon black to modify the surface of the carbon black and consequently to impart hydrophilic nature to the carbon black per se. It is considered that, by virtue of this, just like the dissolution of a water-soluble dye in the form of single molecules in water, the surface-modified carbon black can be brought to such particle diameters that enable the dispersion of the carbon black (preferably minimum particle diameter), and thus can be dispersed in water without the aid of a dispersant. This type of surface-modified carbon black is generally called "self-dispersible carbon black." This carbon black is used in the present invention.

The use of the aqueous pigment dispersion according to the present invention enables the preparation of ink compositions without any dispersant. Therefore, increasing the concentration of the carbon black in the ink composition causes no signficant change in viscosity, and the carbon black can be present in high concentration in the ink composition. Thus, printed images having high density can be realized. Further, the aqueous pigment dispersion according to the present invention has a particular specific surface area/DBP oil absorption ratio. The use of the specific surface-modified carbon black is advantageous in that a signficant improvement in images can be realized over carbon black not satisfying the requirements specified in the present invention.

According to the present invention, "dispersible and/or dissolvable in water without any dispersant" refers to that the carbon black can stably exist, in water, in diameters of particles which can be dispersed in water without the aid of any dispersant. The diameter of particles, which can be dispersed in water, refers to a particle diameter such that the size of the particles no longer can be reduced by prolonging the dispersion time.

According to the present invention, the carbon black, which is to be surface modified, is a carbon black having a specific surface area (m²/g)/DBP oil absorption (ml/100 g) ratio of 0.3 to 2.5. The specific surface area/DBP oil absorption ratio of the carbon black is preferably 0.3 to 1.75.

According to the present invention, the specific surface area (m²/g) may be determined by adsorbing a gas on carbon black and calculating the surface area of the carbon black from the amount of the adsorption and the molecular sectional area in the adsorbed state. This method is known as "nitrogen absorption method." According to the present invention, the specific surface area of carbon black embraces both the specific surface area of a surface-modified carbon black and the specific surface area of carbon black as a starting material for the surface-modified carbon black. Further, it is estimated that the specific surface area of the surface-modified carbon black is substantially identical to that of the surface-unmodified carbon black. That is, the carbon black after the surface modification would have substantially the same specific surface area as the carbon black before the surface modification.

The DBP oil absorption (ml/100 g) is a value defined as the amount of dibutyl phthalate (DBP) absorbed into 100 g of carbon black, and can be determined by the method specified in JIS K 6221. According to this method, an absorptometer is used to determine the amount of DBP per 100 g of carbon black from 70% of the maximum torque created when DBP was added to the carbon black.

Specific examples of preferred carbon blacks usable in the present invention include: #20B and #40 which are carbon blacks manufactured by Mitsubishi Chemical Corporation; Color Black FW 18, Color Black S170, and Special Black 250 which are carbon blacks manufactured by Degussa); Conductex SC and Raven 1255 which are carbon blacks manufactured by Columbian Carbon Co., Ltd.; Monarch 700, Monarch 880, and Elftex 12 which are carbon blacks manufactured by Cabot Corporation.

The surface-modified carbon black according to the present invention may be prepared by introducing hydrophilic functional groups into the carbon black described above to modify the surface of the carbon black.

In the present invention, "introducing hydrophilic functional groups" means that hydrophilic functional groups, such as carboxyl groups, carbonyl groups, hydroxyl groups, sulfone groups, phosphoric acid groups, or quaternary ammonium salt, or salts thereof are bonded onto the surface of carbon black as a pigment either directly or through an alkyl, alkyl ether, or aryl group.

For example, the surface-modified carbon black according to the present invention can be obtained by grafting functional groups or functional group-containing active species onto the surface of the pigment by physical or chemical treatment, such as vacuum plasma. The surface-modified carbon black may also be obtained by oxidizing the surface of a pigment with an oxidizing agent in water to introduce hydrophilic functional groups, such as carboxyl or sulfone groups, or by bonding p-aminobenzoic acid or the like to the carbon black to introduce carboxyl groups through a phenyl group.

According to a preferred embodiment of the present invention, the surface-modified carbon black is such that the surface of carbon black as a pigment has been oxidized with an oxidizing agent in water to introduce hydrophilic functional groups into the surface of the carbon black.

According to a further preferred embodiment of the present invention, the surface-modified carbon black has a specific surface area/DBP oil absorption ratio of 0.3 to 2.5 and has been wet oxidized with a hypohalogenous acid or its salt to introduce hydrophilic functional groups into the carbon black on its surface. Examples of hypohalogenous acids or salts thereof usable herein include an aqueous hypochloric acid solution, sodium hypochlorite, potassium hypochlorite, an aqueous hypobromic acid solution, sodium hypobromite, and potassium hypobromite. Among them, sodium hypochlorite is preferred from the viewpoint of reactivity and cost.

Thus, according to another aspect of the present invention, there is provided a process for producing the above aqueous pigment dispersion, comprising the steps of:
subjecting a carbon black having a specific surface area/DBP oil absorption ratio of 0.3 to 2.5 to wet oxidation with a hypohalogenous acid or its salt to introduce hydrophilic functional groups into the carbon black; and
dispersing and/or dissolving the treated carbon black in water without any dispersant.

In introducing hydrophilic functional groups by oxidizing the surface of a pigment in water to prepare a surface-modified carbon black, in general, the carbon black as described above is mixed, for example, with sodium hypochlorite in water for not less than 5 hr, preferably 10 to 20 hr, to allow a reaction to proceed. In this case, preferably, the carbon black is ground before the reaction, or alternatively may be reacted while grinding. The grinding of the carbon black may be carried out by means of a ball mill, an attritor, a colloid mill, or a sand mill using glass, zirconia, alumina, stainless steel, or magnetic beads. When the carbon black is easily crumbled, carbon black may be size reduced by a rotary homogenizer or an ultrasonic homogenizer.

After the carbon black is ground and oxidized, the beads and coarse particles are separated and removed from the liquid system. By-products of the oxidizing agent and excess ions are then removed by ultrafiltration or the like to perform purification. Thus, an aqueous pigment dispersion is obtained. If necessary, for example, concentration by a separation membrane or the like, filtration through a metallic filter or a membrane filter, or classification by centrifugation or the like may be carried out. Further, neutralization with a hydroxide of an alkali metal salt or an amine may also be carried out.

In the aqueous pigment dispersion according to the present invention, the content of the hydrophilic functional groups in the surface-modified carbon black after wet oxidation is preferably not less than 1.5 mmol/g. When the hydrophilic functional group content is in the above content range, the surface-modified carbon black is dispersible or dissolvable in water without any dispersant. The amount of hydrophilic functional groups, such as carboxyl, carbonyl, or hydroxyl groups, in the surface-modified carbon back produced by the oxidation may be determined by a vacuum pyrolysis gas method used in the measurement of the volatile content of conventional carbon black. The vacuum pyrolysis gas method is described in Journal of The Chemical Society of Japan, Vol. 88, No. 3, 69-74 (1967). This method will be described in more detail.

The content of hydrophilic functional groups in the surface-modified carbon black is measured with a vacuum pyrolysis apparatus provided with an electric furnace and a gas chromatograph as shown in Fig. 1. The gas chromatograph used is of an intermediate cell type. The first-stage column is packed with silica gel, and the second-stage column is packed with Molecular Sieve 13X. Argon is used as a carrier gas. Carbon black (0.1 to 0.5 g) is weighed, placed in a quartz tube, loaded into an electric oven, and then pretreated by evacuation at 120°C for 2 hr to remove adsorbed water and air. Next, a temperature controller in the electric oven is set to 200°C, and the system is kept at this temperature for one hr, during which time evolved gas is collected. The gas is gas chromatographed to analyze the composition. Immediately after that, the temperature is set to 300°C, and gas evolved during next one hr is collected and analyzed. Thereafter, gas evolved during each one hr at 400°C, 500°C, 600°C, 700°C, 800°C, 900°C, and 1000°C in that order is collected, and then gas chromatographed to analyze the composition. The gas evolved is composed mainly of carbon monoxide and carbon dioxide. The content of hydrophilic functional groups in the surface-modified carbon black is calculated based on data obtained about the composition of gas evolved under each temperature condition.

In the aqueous pigment dispersion according to the present invention, water serves as a main solvent. Water may be pure water obtained by ion exchange, ultrafiltration, reverse osmosis, distillation or the like, or ultrapure water. Further, water, which has been sterilized by ultraviolet irradiation or by addition of hydrogen peroxide or the like, is suitable because, when the aqueous pigment dispersion is stored for a long period of time, it can prevent the growth of mold or bacteria.

### Ink composition

The water-base ink composition according to the present invention may be used in recording methods using an ink composition. Recording methods using an ink composition include, for example, an ink jet recording method, a recording method using writing utensils, such as pens, and other various printing methods. Accordingly, the water-base ink composition of the present invention may be preferably used in, for example, writing utensils, such as water-base pens, ink jet recording method, printing, stamps and other applications.

The water-base ink composition according to the present invention comprises at least the aqueous pigment dispersion described above.

The content of the surface-modified carbon black in the water-base ink composition according to the present invention is preferably 1 to 15% by weight, more preferably 2 to 10% by weight, based on the ink composition. The presence of the surface-modified carbon black in the above content range in the ink composition is advantageous in that ink compositions having viscosity usable in the ink jet recording method can be provided while ensuring satisfactory print density.

In the water-base ink composition according to the present invention, water is preferably used as a main solvent. Water may be pure water obtained by ion exchange, ultrafiltration, reverse osmosis, distillation or the like, or ultrapure water. Further, water, which has been sterilized by ultraviolet irradiation or by addition of hydrogen peroxide or the like, is suitable because, when the water-base ink composition is stored for a long period of time, it can prevent the growth of mold or bacteria.

According to a preferred embodiment of the present invention, the water-base ink composition contains the aqueous pigment dispersion described above, and, preferably, has a penetrability such that, when the coverage of the ink composition on a recording medium is 1 mg/cm², the penetration time of the ink composition is less than one sec.

The expression "a penetrability such that, when the coverage of the ink composition on a recording medium is 1 mg/cm², the penetration time of the ink is less than one sec" specifically means that, when 50 ng of the ink composition is coated onto a plain paper, for example, in an area of 360 dpi (dots/inch) x 360 dpi, the time necessary for the print face to dry to touch is less than one sec. In this case, a neutral plain paper, for example, Xerox P (tradename; manufactured by Fuji Xerox Co., Ltd.), is used as the plain paper.

In order to provide the penetrability of the ink composition, penetration accelerators, such as water-soluble organic solvents capable of lowering the surface tension of an aqueous solution or surfactants, may be added to the ink composition to improve the capability of wetting recording media.

Examples of water-soluble organic solvents usable for this purpose include: lower alcohols, such as ethanol and propanol; cellosolves, such as ethylene glycol monomethyl ether and ethylene glycol monoethyl ether; carbitols, such as diethylene glycol monomethyl ether and diethylene glycol monoethyl ether; and 1,2-alkyldiols, such as 1,2-hexanediol and 1,2-octanediol.

According to a further preferred embodiment of the present invention, the water-soluble organic solvent used as the penetration accelerator is more preferably a glycol butyl ether water-soluble organic solvent. Glycol butyl ether water-soluble organic solvents usable herein include, for example, ethylene glycol mono-n-butyl ether, diethylene glycol n-butyl ether, and triethylene glycol n-butyl ether. The combination of the water-soluble organic solvent with the surface-modified carbon black can reduce feathering or bleeding at the time of printing and thus can provide good prints.

Surfactants usable herein include, for example, anionic surfactants, such as fatty acid salts and alkylsulfuric acid ester salts, nonionic surfactants, such as polyoxyethylene alkyl ethers and polyoxyethylene phenyl ether, cationic surfactants, and amphoteric surfactants.

More preferred surfactants include nonionic surfactants, such as polyoxyethylene alkyl ethers and polyoxyethylene phenyl ethers. These surfactants are advantageous over the ionic surfactants in that foaming of the ink can be reduced. Specific examples of such nonionic surfactants include Nissan Nonion K-211, K-220, P-213, E-215, E-220, S-215, S-220, HS-220, NS-212, and NS-220 (tradenames; manufactured by Nippon Oils & Fats Co., Ltd.). More preferred surfactants include, for example, acetylene glycol surfactants among the nonionic surfactants, and examples of acetylene glycol surfactants include Surfynol 61, 82, 104, 440, 465, and 485 (tradenames; manufactured by Air Products and Chemicals, Inc.). They, when added to ink composition, can substantially completely prevent foaming, and thus is particularly suitable in the case where the ink composition is used in ink jet recording.

It should be noted that, since the surface-modified carbon black according to the present invention is dispersible and/or dissolvable in water without the aid of any dispersant, such as a surfactant, the surfactant used in the ink composition according to the present invention may be selected only for the purpose of attaining penetration acceleration effect. Specifically, in general, in order to impart dispersibility to a pigment, selection of a combination should be done so that the pigment and each material are adsorbed on each other. By contrast, according to the present invention, the surfactant can be selected by taking into consideration only the penetration acceleration effect without the need to take the above combination into consideration.

According to the present invention, preferably, the water-soluble organic solvents or surfactants are used alone or in combination of two or more as the penetration accelerator to regulate the surface tension of the ink composition to less than 40 mN/m, preferably less than 35 mN/m.

When the water-base ink composition according to the present invention is used in ink jet recording, the ink composition may further contain a humectant from the viewpoint of preventing ink from drying at the front end of ink ejection nozzles.

The humectant is generally selected from water-soluble and highly hygroscopic materials. Specific examples of such humectants include, for example, polyols, such as glycerin, ethylene glycol, diethylene glycol, triethylene glycol, polyethylene glycol, propylene glycol, dipropylene glycol, polypropylene glycol, 1,3-propanediol, 1,4-butanediol, 1,5-pentanediol, 1,6-hexanediol, 1,2,6-hexanetriol, and pentaerythritol; lactams, such as 2-pyrrolidone, N-methyl-2-pyrrolidone, and ε-caprolactam; ureas, such as urea, thiourea, ethyleneurea, and 1,3-dimethylimidazolidinones; and saccharides, such as maltitol, sorbitol, gluconic lactone, and maltose.

These humectants may be added, to the ink composition according to the present invention, in such an amount that, when they are used in combination with other additives for ink, the viscosity of the ink composition can be brought to not more than 25 mPa·s at 25°C.

If necessary, the water-base ink composition according to the present invention may further contain fixing agents, pH adjustors, antioxidants, ultraviolet absorbers, preservatives, antimold and the like.

Water-soluble resins may be used as the fixing agent. Examples of such fixing agents include water-soluble rosins, alginic acid, polyvinyl alcohol, hydroxypropylcellulose, carboxymethylcellulose, hydroxyethylcellulose, methylcellulose, styrene/acrylic acid resins, styrene/acrylic acid/acrylic ester resin, styrene/maleic acid resin, styrene/maleic acid semi-ester resin, acrylic aid/acrylic ester resin, isobutylene/maleic acid resin, rosin-modified maleic acid resin, polyvinylpyrrolidone, gum arabic, starch, polyallylamine, polyvinylamine, and polyethyleneimine. It should be noted that, since the surface-modified carbon black according to the present invention is a colorant which is dispersible and/or dissolvable in water without the aid of any dispersant comprising a water-soluble resin, the water-soluble resin used in the ink composition according to the present invention may be selected only for the purpose of attaining fixation effect. Specifically, in general, in order to impart dispersibility to a pigment, selection of a combination should be done so that the pigment and each material are adsorbed on each other. By contrast, according to the present invention, the water-soluble resin can be selected by taking into consideration only the fixation effect without the need to take the above combination into consideration.

pH adjustors usable herein include, for example, hydroxides of alkali metals and amines, such as lithium hydroxide, sodium hydroxide, potassium hydroxide, triethanolamine, and diethanolamine.

Examples of antioxidants and ultraviolet absorbers include: allophanate compounds, such as allophanate and methyl allophanate; biuret compounds, such as biuret, dimethylbiuret, and tetramethylbiuret; L-ascorbic acid and salts thereof; and Tinuvin 328, 900, 1130, 384, 292, 123, 144, 622, 770, and 292, Irgacor 252 and 153, and Irganox 1010, 1076, 1035, and MD1024, manufactured by Ciba-Geigy; and lanthanide oxides.

For example, sodium benzoate, pentachlorophenol sodium, 2-pyridinethiol-1-oxide sodium, sodium sorbate, sodium dehydroacetate, and 1,2-dibenzothiazoline-3-one (Proxel CRL, Proxel BDN, Proxel GXL, Proxel XL-2, and Proxel TN, manufactured by ICI) may be used as preservatives or antimold in the ink composition of the present invention.

### Recording method

The ink composition according to the present invention may be used in a recording method wherein the ink composition is deposited onto a recording medium to perform printing.

According to a further embodiment of the present invention, there is provided an ink jet recording method comprising the steps of: ejecting droplets of an ink composition according to the present invention; and depositing the droplets onto a recording medium to perform printing. In the ink jet recording method according to the present invention, any method may be used so far as the ink composition is ejected, through fine nozzles, as droplets which are then deposited onto a recording medium. Specific embodiments thereof will be described.

One of them is a static electricity-driven method. In this method, a strong electric field is applied between nozzles and accelerating electrodes disposed in the front of the nozzles to continuously eject the ink as droplets through nozzles. During a period in which, after ejection, the ink droplets are located between the deflecting electrodes, a printing information signal is sent to the deflecting electrodes to perform recording. Alternatively, in this method, if necessary, ejection may be carried out in response to the print information signal without deflecting the ink droplets. According to another embodiment, a pressure is applied to an ink composition by means of a miniature pump, and nozzles are mechanically vibrated by means of a quartz oscillator or the like to forcibly eject ink droplets. According to this embodiment, at the same time that the ink droplets are ejected, the ink droplets are electrified, and during a period in which, after ejection, the ink droplets are located between the deflecting electrodes, a printing information signal is sent to the deflecting electrodes to perform recording. According to still another embodiment, a piezoelectric element is used. In this case, a pressure and a printing information signal are simultaneously applied to an ink composition by means of a piezoelectric element to eject ink droplets, thereby performing recording. According to a further embodiment, the volume of the ink composition is rapidly increased through the action of thermal energy. In this case, bubbles of the ink composition are thermally formed in response to a printing information signal by means of microelectrodes to eject ink droplets, thereby performing recording. According to the ink jet recording method of the present invention, ink jet recording may be stably carried out.

According to a further aspect of the present invention, records produced by these recording methods are also be provided.

### EXAMPLES

The present invention will be described in more detail with reference to the following examples, though it is not limited to these examples only.

### Preparation of pigment dispersion

### Pigment dispersion 1

Color Black FM 18 (tradename; manufactured by Degussa), which is a carbon black having a specific surface area/DBP oil absorption ratio of 1.63, was mixed in an amount of 35 g with 1 kg of water. The mixture was ball milled using zirconia beads. Sodium hypochiorite (500 g) was added to the resultant milled stock liquid, and the mixture was boiled for 10 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 10% by weight to prepare a pigment dispersion 1.

### Pigment dispersion 2

Color Black S170 (tradename; manufactured by Degussa), which is a carbon black having a specific surface area/DBP oil absorption ratio of 1.33, was mixed in an amount of 40 g with 1 kg of water. The mixture was ball milled using zirconia beads. Sodium hypochlorite (500 g) was added to the resultant milled stock liquid, and a reaction was allowed to proceed while ball milling for 5 hr. The mixture was further boiled with stirring for 4 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 10% by weight to prepare a pigment dispersion 2.

### Pigment dispersion 3

CONDUCTEX SC (tradename; manufactured by Columbian Carbon Co., Ltd.), which is a carbon black having a specific surface area/DBP oil absorption ratio of 1.91, was mixed in an amount of 40 g with 1 kg of water. The mixture was ball milled using zirconia beads. Sodium hypochlorite (500 g) was added to the resultant milled stock liquid, and the mixture was boiled for 10 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 10% by weight to prepare a pigment dispersion 3.

### Pigment dispersion 4

#40 (tradename; manufactured by Mitsubishi Chemical Corporation), which is a carbon black having a specific surface area/DBP oil absorption ratio of 1.14, was mixed in an amount of 60 g with 1 kg of water. The mixture was ball milled using zirconia beads. Sodium hypochlorite (500 g) was added to the resultant milled stock liquid, and a reaction was allowed to proceed while ball milling for 5 hr. The mixture was further boiled with stirring for 4 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 10% by weight to prepare a pigment dispersion 4.

### Pigment dispersion 5

CONDUCTEX SC (tradename; manufactured by Columbian Carbon Co., Ltd.), which is a carbon black having a specific surface area/DBP oil absorption ratio of 1.91, was mixed in an amount of 40 g with 1 kg of water. The mixture was ball milled using zirconia beads. Sodium hypochlorite (500 g) was added to the resultant milled stock liquid, and the mixture was boiled for 10 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 15% by weight to prepare a pigment dispersion 5.

### Pigment dispersion 6

Raven 1255 (tradename; manufactured by Columbian Carbon Co., Ltd.), which is a carbon black having a specific surface area/DBP oil absorption ratio of 1.97, was mixed in an amount of 100 g with 5 kg of N-methylpyrrolidone. The mixture was ball milled using zirconia beads. Sulfamic acid (50 g) was added to the resultant milled stock liquid, and the mixture was subjected to sulfonation at 150°C for 10 hr. The whole quantity of the mixture was poured into 10 kg of ice. The resultant stock dispersion was filtered through a glass fiber filter GA-100 (tradename; manufactured by Advantec Toyo Kaisha Ltd.). The wet cake was redispersed in 5 kg of water. The dispersion was filtered and then washed with water. The wet cake thus obtained was redispersed in 2 kg of water. The dispersion was desalted and purified through a reverse osmosis membrane to an electrical conductivity of 2 mS/cm, and further concentrated to a pigment concentration of 15% by weight to prepare a pigment dispersion 6.

### Pigment dispersion 7

Color Black FW 18 (tradename; manufactured by Degussa), which is a carbon black having a specific surface area/DBP oil absorption ratio of 1.63, was mixed in an amount of 35 g with 1 kg of water. The mixture was ball milled using zirconia beads. Sodium hypochlorite (500 g) was added to the resultant milled stock liquid, and the mixture was boiled for 10 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 15% by weight to prepare a pigment dispersion 7.

### Pigment dispersion 8

Color Black S 170 (tradename; manufactured by Degussa), which is a carbon black having a specific surface area/DBP oil absorption ratio of 1.33, was mixed in an amount of 40 g with 1 kg of water. The mixture was ball milled using zirconia beads. Sodium hypochlorite (500 g) was added to the resultant milled stock liquid, and a reaction was allowed to proceed while ball milling for 5 hr. The mixture was further boiled with stirring for 4 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 15% by weight to prepare a pigment dispersion 8.

### Pigment dispersion 9 (comparative example)

#45L (tradename; manufactured by Mitsubishi Chemical Corporation), which is a carbon black having a specific surface area/DBP oil absorption ratio of 2.56, was mixed in an amount of 100 g with 1 kg of water. The mixture was ball milled using zirconia beads. Sodium hypochlorite (500 g) was added to the resultant milled stock liquid, and a reaction was allowed to proceed while ball milling for 5 hr. The mixture was further boiled with stirring for 4 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 10% by weight to prepare a pigment dispersion 9.

### Pigment dispersion 10 (comparative example)

Raven 16 (tradename; manufactured by Columbian Carbon Co., Ltd.), which is a carbon black having a specific surface area/DBP oil absorption ratio of 0.24, was mixed in an amount of 300 g with 1 kg of water. The mixture was ball milled using zirconia beads. Sodium hypochlorite (300 g) was added to the resultant milled stock liquid, and a reaction was allowed to proceed while ball milling for 5 hr. The mixture was further boiled with stirring for 4 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 10% by weight to prepare a pigment dispersion 10.

### Pigment dispersion 11 (comparative example)

Color Black FW 18 (tradename; manufactured by Degussa) (100 g) as used in Example 1, 150 g of Joncryl J-62 (tradename; manufactured by Johnson Polymer Corp.) as a dispersant for a water-soluble resin, 6 g of sodium hydroxide, and 250 g of water were mixed together. The mixture was dispersed by means of a ball mill using zirconia beads for 10 hr. The stock dispersion thus obtained was filtered through a stainless steel filter having a pore diameter of about 5 µm, followed by dilution with water to a pigment concentration of 10% by weight to prepare a pigment dispersion 11 with the pigment being dispersed with the aid of a water-soluble resin.

### Preparation of ink compositions

### Ink composition 1

The aqueous pigment dispersion (pigment dispersion 1) (20 g), 5 g of glycerin and 5 g of 2-pyrrolidone as humectants, and 4 g of ethanol as a penetration accelerator were mixed together. Ultrapure water was added to the mixture to bring the total amount of the mixed solution to 100 g. The mixed solution was stirred for 2 hr, and then filtered through a stainless steel filter having a pore diameter of about 5 µm to prepare an ink composition 1.

### Ink composition 2

The aqueous pigment dispersion (pigment dispersion 2) (20 g), 6 g of triethylene glycol and 5 g of urea as humectants, and 4 g of ethanol as a penetration accelerator were mixed together. Ultrapure water was added to the mixture to bring the total amount of the mixed solution to 100 g. The mixed solution was stirred for 2 hr, and then filtered through a stainless steel filter having a pore diameter of about 5 µm to prepare an ink composition 2.

### Ink composition 3

The pigment dispersion 5 (45 g), 10 g of glycerin and 5 g of 2-pyrrolidone as humectants, and 4 g of tert-pentanol and 1 g of Nissan Nonion NS-220 (tradename; a nonionic surfactant, manufactured by Nippon Oils & Fats Co., Ltd.) as penetration accelerators were mixed together. Ultrapure water was added to the mixture to bring the total amount of the mixed solution to 100 g. The mixed solution was adjusted to pH 7.5 by the addition of triethanolamine. The mixed solution was stirred for 2 hr, and then filtered through a stainless steel filter having a pore diameter of about 5 µm to prepare an ink composition 3.

### Ink composition 4

The pigment dispersion 6 (45 g), 10 g of triethylene glycol and 5 g of diethylene glycol as humectants, and 2.5 g of Nissan Nonion NS-210 (tradename; a nonionic surfactant, manufactured by Nippon Oils & Fats Co., Ltd.) as penetration accelerators were mixed together. Ultrapure water was added to the mixture to bring the total amount of the mixed solution to 100 g. The mixed solution was adjusted to pH 7.5 by the addition of triethanolamine. The mixed solution was stirred for 2 hr, and then filtered through a stainless steel filter having a pore diameter of about 5 µm to prepare an ink composition 4.

### Ink composition 5

The pigment dispersion 7 (45 g), 10 g of glycerin and 5 g of 2-pyrrolidone as humectants, and 4 g of tert-pentanol and 1 g of Nissan Nonion NS-220 (tradename; a nonionic surfactant, manufactured by Nippon Oils & Fats Co., Ltd.) as penetration accelerators were mixed together. Ultrapure water was added to the mixture to bring the total amount of the mixed solution to 100 g. The mixed solution was adjusted to pH 7.5 by the addition of triethanolamine. The mixed solution was stirred for 2 hr, and then filtered through a stainless steel filter having a pore diameter of about 5 µm to prepare an ink composition 5.

### Ink composition 6

The pigment dispersion 8 (45 g), 10 g of triethylene glycol and 5 g of diethylene glycol as humectants, and 2.5 g of Nissan Nonion NS-210 (tradename; a nonionic surfactant, manufactured by Nippon Oils & Fats Co., Ltd.) as penetration accelerators were mixed together. Ultrapure water was added to the mixture to bring the total amount of the mixed solution to 100 g. The mixed solution was adjusted to pH 7.5 by the addition of triethanolamine. The mixed solution was stirred for 2 hr, and then filtered through a stainless steel filter having a pore diameter of about 5 µm to prepare an ink composition 6.

### Ink composition 7

The pigment dispersion 8 (45 g), 10 g of glycerin and 5 g of diethylene glycol as humectants, and 7.5 g of diethylene glycol mono-n-butyl ether as penetration accelerators were mixed together. Ultrapure water was added to the mixture to bring the total amount of the mixed solution to 100 g. The mixed solution was adjusted to pH 7.3 by the addition of triethanolamine. The mixed solution was stirred for 2 hr, and then filtered through a stainless steel filter having a pore diameter of about 5 µm to prepare an ink composition 7.

### Ink composition 8

The pigment dispersion 7 (45 g), 10 g of glycerin and 5 g of 1,5-pentanediol as humectants, and 5 g of triethylene glycol mono-n-butyl ether as penetration accelerators were mixed together. Ultrapure water was added to the mixture to bring the total amount of the mixed solution to 100 g. The mixed solution was adjusted to pH 7.3 by the addition of triethanolamine. The mixed solution was stirred for 2 hr, and then filtered through a stainless steel filter having a pore diameter of about 5 µm to prepare an ink composition 8.

### Ink composition 9

The pigment dispersion 7 (45 g), 7.5 g of glycerin and 7.5 g of 1,5-pentanediol as humectants, and 0.3 g of Surfynol 104 and 1.5 g of Surfynol 485 (acetylene glycol surfactants) as penetration accelerators were mixed together. Ultrapure water was added to the mixture to bring the total amount of the mixed solution to 100 g. The mixed solution was adjusted to pH 7.3 by the addition of triethanolamine. The mixed solution was stirred for 2 hr, and then filtered through a stainless steel filter having a pore diameter of about 5 µm to prepare an ink composition 9.

### Ink composition 10

The pigment dispersion 8 (45 g), 10 g of glycerin and 5 g of diethylene glycol as humectants, and 5 g of diethylene glycol mono-n-butyl ether and 1 g of Surfynol 465 (an acetylene glycol surfactant) as penetration accelerators were mixed together. Ultrapure water was added to the mixture to bring the total amount of the mixed solution to 100 g. The mixed solution was adjusted to pH 7.2 by the addition of triethanolamine. The mixed solution was stirred for 2 hr, and then filtered through a stainless steel filter having a pore diameter of about 5 µm to prepare an ink composition 10.

### Ink composition 11 (comparative example)

An ink composition 11 was prepared in the same manner as used in the preparation of the ink composition 1, except that the pigment dispersion 9 was used.

### Ink composition 12 (comparative example)

An ink composition 12 was prepared in the same manner as used in the preparation of the ink composition 1, except that the pigment dispersion 10 was used.

### Ink composition 13 (comparative example)

An ink composition 13 was prepared in the same manner as used in the preparation of the ink composition 1, except that the pigment dispersion 11 was used.

### Ink composition 14 (comparative example)

#45L (tradename; manufactured by Mitsubishi Chemical Corporation), which is a carbon black having a specific surface area/DBP oil absorption ratio of 2.56, was mixed in an amount of 300 g with 1 kg of water. The mixture was ball milled using zirconia beads. Sodium hypochlorite (450 g) was added to the resultant milled stock liquid, and a reaction was allowed to proceed while ball milling for 5 hr. The mixture was further boiled with stirring for 4 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 15% by weight to prepare a pigment dispersion. An ink composition 14 was prepared in the same manner as described above in connection with the ink composition 7, except that 45 g of the pigment dispersion prepared just above was used.

### Ink composition 15 (comparative example)

Raven 16 (tradename; manufactured by Columbian Carbon Co., Ltd.), which is a carbon black having a specific surface area/DBP oil absorption ratio of 0.24, was mixed in an amount of 300 g with 1 kg of water. The mixture was ball milled using zirconia beads. Sodium hypochlorite (300 g) was added to the resultant milled stock liquid, and a reaction was allowed to proceed while ball milling for 5 hr. The mixture was further boiled with stirring for 4 hr to conduct wet oxidation. The resultant stock dispersion was filtered through a glass fiber filter GA-100 (tradename; manufactured by Advantec Toyo Kaisha Ltd.), and then washed with water. The wet cake thus obtained was redispersed in 5 kg of water. The dispersion was desalted and purified through a reverse osmosis membrane to an electrical conductivity of 2 mS/cm, and further concentrated to a pigment concentration of 15% by weight to prepare a pigment dispersion. An ink composition 15 was prepared in the same manner as described above in connection with the ink composition 7, except that 45 g of the pigment dispersion prepared just above was used.

### Evaluation of pigment dispersions

Each of the pigment dispersions 1 to 4 and the pigment dispersions 9 to 11 was coated onto Xerox P (tradename; manufactured by Fuji Xerox Co., Ltd.) as a neutral plain paper by means of an applicator with the coating thickness being set to 25 µm. The coatings were dried, and, for the dried coatings, the OD value was measured with a Macbeth densitomerter TR-927 (tradename; manufactured by Kollmorgen Corporation). The results were as summarized in Table 1.

**Table 1**

| Pigment dispersion | Specific surface area/DBP oil absorption ratio | OD value |
|---|---|---|
| 1 | 1.63 | 1.53 |
| 2 | 1.33 | 1.55 |
| 3 | 1.91 | 1.45 |
| 4 | 1.14 | 1.47 |
| 9 | 2.56 | 1.30 |
| 10 | 0.24 | 1.25 |
| 11 | 1.63 | 1.32 |

### Evaluation 1 of ink compositions

For the ink compositions 1 and 2 and the ink compositions 11 to 13, printing was carried out on Xerox P (tradename; manufactured by Fuji Xerox Co., Ltd.) as a neutral plain paper by means of a piezoelectric on-demand ink jet recording apparatus MJ-500 (tradename; manufactured by Seiko Epson Corporation). After drying, for the dried prints, the OD value was measured with a Macbeth densitomerter TR-927 (tradename; manufactured by Kollmorgen Corporation). The results were as summarized in Table 2.

**Table 2**

| Ink composition | Specific surface area/DBP oil absorption ratio | OD value |
|---|---|---|
| 1 | 1.53 | 1.55 |
| 2 | 1.33 | 1.55 |
| 11 | 2.56 | 1.31 |
| 12 | 0.24 | 1.33 |
| 13 | 1.63 | 1.38 |

### Evaluation 2 of ink compositions

For the ink compositions 3 to 10 and ink compositions 14 to 15 each having a penetrability of less than one sec in terms of ink penetration time, printing was carried out on Xerox P (tradename; manufactured by Fuji Xerox Co., Ltd.) as a neutral plain paper by means of a piezoelectric on-demand ink jet recording apparatus MJ-930C (tradename; manufactured by Seiko Epson Corporation). After drying, for the dried prints, the OD value was measured with a Macbeth densitomerter TR-927 (tradename; manufactured by Kollmorgen Corporation). The results were as summarized in Table 3.

**Table 3**

| Ink composition | Specific surface area/DBP oil absorption ratio | OD value |
|---|---|---|
| 3 | 1.91 | 1.40 |
| 4 | 1.97 | 1.37 |
| 5 | 1.63 | 1.42 |
| 6 | 1.33 | 1.44 |
| 7 | 1.33 | 1.44 |
| 8 | 1.63 | 1.42 |
| 9 | 1.63 | 1.43 |
| 10 | 1.33 | 1.47 |
| 14 | 2.56 | 1.17 |
| 15 | 0.24 | 1.24 |

### Evaluation 3 of ink composition

Each print formed in the evaluation 2 was visually inspected for print quality (for example, feathering of prints).

For the ink compositions 7 and 8 with a glycol butyl ether as a penetration accelerator added thereto, there was no significant feathering around the print, and the print quality was particularly good.

## Claims

1. An aqueous pigment dispersion comprising water and a surface-modified carbon black,
the surface-modified carbon black having a specific surface area (m²/g)/DBP oil absorption (ml/100 g) ratio of 0.3 to 2.5 and having on the surface thereof hydrophilic functional groups which make the carbon black dispersible and/or dissolvable in water without any dispersant.

2. The aqueous pigment dispersion according to claim 1, wherein the surface-modified carbon black has a specific surface area (m²/g)/DBP oil absorption (ml/100 g) ratio of 0.3 to 1.75.

3. The aqueous pigment dispersion according to claim 1 or 2, wherein the content of the hydrophilic functional groups in the surface-modified carbon black is not less than 1.5 mmol/g.

4. A process for producing the aqueous pigment dispersion according to any one of claims 1 to 3, comprising the steps of:
subjecting a carbon black having a specific surface area/DBP oil absorption ratio of 0.3 to 2.5 to wet oxidation with a hypohalogenous acid or its salt to introduce hydrophilic functional groups into the carbon black; and
dispersing and/or dissolving the treated carbon black in water without any dispersant.

5. A water-base ink composition comprising at least the aqueous pigment dispersion according to any one of claims 1 to 3.

6. The water-base ink composition according to claim 5, which, when the amount of the ink composition deposited on a recording medium is 1 mg/cm², has a penetrability of less than one sec in terms of the penetration time of the ink composition.

7. The water-base ink composition according to claim 5 or 6, which has a surface tension of less than 40 mN/m.

8. The water-base ink composition according to any one of claims 5 to 7, which further comprises a glycol butyl ether water-soluble organic solvent.

9. The water-base ink composition according to any one of claims 5 to 8, which further comprises a nonionic surfactant.

10. The water-base ink composition according to claim 9, wherein the nonionic surfactant is an acetylene glycol surfactant.

11. A recording method comprising the step of depositing an ink composition onto a recording medium to perform printing, wherein the ink composition is the water-base ink composition according to any one of claims 5 to 10.

12. An ink jet recording method comprising the steps of: ejecting droplets of an ink composition; and depositing the droplets onto a recording medium to perform printing, wherein the ink composition is the water-base ink composition according to any one of claims 5 to 10.

13. A record produced by the recording method according to claim 11 or 12.
